# NEUE EUROPÄISCHE PATENTSCHRIFT

(11) **EP 2 258 485 B2**
(45) Veröffentlichungstag und Bekanntmachung des Hinweises auf die Entscheidung über den Einspruch: **20.05.2020**
(45) Hinweis auf die Patenterteilung: 08.05.2013
(21) Anmeldenummer: 10177199.6
(22) Anmeldetag: 17.03.2006
(51) Int. Cl.: B01D 46/10, B01D 46/24, B01D 46/00, B01D 46/52, B05B 14/435, B05B 14/468, B05B 14/43, B05B 14/46

(54) **Vorrichtung zum Abtrennen von Nasslack-Overspray**
Device for separating liquid coating overspray
Dispositif de séparation de pulvérisations de laque humide

(30) Priorität: 24.03.2005 DE 102005013711
(43) Veröffentlichungstag der Anmeldung: 08.12.2010
(62) Teilanmeldung aus: 06707593.7
(73) Patentinhaber: Dürr Systems AG, 74321 Bietigheim-Bissingen (DE)
(72) Erfinder: Wieland, Dietmar, 70180, Stuttgart (DE); Tobisch, Wolfgang, 70193, Stuttgart (DE); Rundel, Klaus, 73730, Esslingen (DE); Rajtschan, Alexander, 70469, Stuttgart (DE)
(74) Vertreter: Hoeger, Stellrecht & Partner Patentanwälte mbB

(56) Entgegenhaltungen:
- EP-A1- 0 053 943
- WO-A1-96/00131
- WO-A1-97/14508
- WO-A1-97/18884
- DE-A1- 4 211 465

## Beschreibung

Die vorliegende Erfindung betrifft eine Anlage zum Lackieren von Gegenständen, insbesondere von Fahrzeugkarosserien, umfassend mindestens eine Lackierkabine und mindestens eine Vorrichtung zum Abtrennen von Nasslack-Overspray aus einem Overspray-Partikel enthaltenden Abluftstrom, wobei die Overspray-Partikel in einem Applikationsbereich der Lackierkabine in den Abluftstrom gelangen.

Solche Vorrichtungen werden in Anlagen zum Lackieren von Werkstücken, insbesondere zum Spritzlackieren von Fahrzeugkarosserien, eingesetzt, in denen ein Luftstrom durch einen Applikationsbereich der Anlage erzeugt wird, welcher überschüssigen Nasslack aus dem Applikationsbereich abführt.

Es ist bekannt, den mitgeführten Nasslack-Overspray in einer Auswaschungsanlage mittels einer Waschflüssigkeit aus dem Abluftstrom abzuscheiden.

Die bekannten Auswaschungsanlagen haben jedoch insbesondere bei Umluftführung den Nachteil, dass dem Abluftstrom, aus dem der Nasslack-Overspray abgeschieden wird, eine hohe Feuchtigkeitsmenge zugeführt wird, so dass der Abluftstrom nach erfolgter Abscheidung des Nasslack-Oversprays einer energieintensiven Entfeuchtung unterzogen werden muss.

Ferner ist für die Aufbereitung der mit dem Nasslack-Overspray beladenen Waschflüssigkeit ein großer Aufwand erforderlich.

Die WO 96/00131 offenbart eine Anlage zum Lackieren von Gegenständen mit Pulverlack, welche eine Vorrichtung zum Abtrennen von Pulverlack-Overspray aus einem Overspray-Partikel enthaltenden Abluftstrom umfasst und im Übrigen dem Oberbegriff von Anspruch 1 entspricht.

Der vorliegenden Erfindung liegt die Aufgabe zugrunde, eine Anlage der eingangs genannten Art zu schaffen, welche in besonders energiesparender Weise betreibbar ist.

Diese Aufgabe wird durch eine Anlage nach Alternative a) von Anspruch 1 gelöst.

Der vorliegenden Erfindung liegt ferner die Aufgabe zugrunde, die Abreinigung des mindestens einen regenerierbaren Oberflächenfilters zu erleichtern.

Diese Aufgabe wird durch eine Anlage nach der Alternative b) von Anspruch 1 gelöst.

Besondere Ausgestaltungen der erfindungsgemäßen Anlage sind Gegenstand der Ansprüche 2 bis 7.

Unter einem regenerierbaren Oberflächenfilter ist ein Filter zu verstehen; das eine Filteroberfläche aufweist, an welcher der vom Abluftstrom mitgeführte Nasslack-Overspray abgeschieden wird, und das, vorzugsweise im laufenden Betrieb der Vorrichtung, von dem darauf abgeschiedenen Lack-Overspray reinigbar ist.

Ein solches regenerierbares Oberflächenfilter ist eine "trockene" Abtrennvorrichtung, in welcher keine Flüssigkeit zum Auswaschen der Overspray-Partikel aus dem Abluftstrom verwendet wird, sondern Filterelemente zum Abtrennen der Overspray-Partikel aus dem Luftstrom verwendet werden.

Dabei kann die Abreinigung des regenerierbaren Oberflächenfilters mittels einer "trockenen" Abreinigungsvorrichtung, d.h. ohne Verwendung einer Reinigungsflüssigkeit, oder mittels einer "nassen" Abreinigungsvorrichtung, d.h. unter Verwendung einer Reinigungsflüssigkeit, erfolgen.

Eine "trockene" Abtrennvorrichtung kann auch mit einer "nassen" Abreinigungsvorrichtung versehen sein, solange nur die Abscheidung der Overspray-Partikel an dem regenerierbaren Abtrennelement auf trockene Weise, d.h. ohne Auswaschung mittels einer Auswaschflüssigkeit, erfolgt.

Vorzugsweise erfolgt die gesamte Abtrennung von Nasslack-Overspray aus dem Overspray-Partikel enthaltenden Abluftstrom vollständig trocken, das heißt ohne Verwendung einer Flüssigkeit zum Auswaschen der Overspray-Partikel aus dem Abluftstrom.

Durch die Verwendung eines regenerierbaren Oberflächenfilters in der Abtrennvorrichtung entfällt die Notwendigkeit, eine Auswaschungsanlage und die zugehörige Wasseraufbereitung vorzusehen. Hierdurch werden der Energieverbrauch der Abtrennvorrichtung und (durch den Wegfall der Wasseraufbereitung) auch der Platzbedarf der Vorrichtung deutlich reduziert.

Die Abreinigbarkeit des Oberflächenfilters gewährleistet ferner eine lange Standzeit des Filters auch bei großen Mengen an anfallendem Nasslack-Overspray.

Durch das Vorsehen eines verengten Bereichs im Strömungsweg des Abluftstroms von dem Applikationsbereich zu der Abtrennvorrichtung wird ferner erreicht, dass das regenerierbare Oberflächenfilter vor direkten Einwirkungen aus dem Applikatonsbereich geschützt ist.

Wenn die mittlere Strömungsrichtung des Abluftstroms beim Passieren des verengten Bereichs im Wesentlichen erhalten bleibt, wird erreicht, dass eine vorzeitige Abscheidung von Nasslack-Overspray an Begrenzungswänden des verengten Bereichs vermieden wird.

Bei einer bevorzugten Ausgestaltung der erfindungsgemäßen Vorrichtung ist vorgesehen, dass der verengte Bereich unterhalb des Applikationsbereiches angeordnet ist.

Der Applikationsbereich ist in der Lackierkabine angeordnet, und der verengte Bereich ist vorzugsweise innerhalb einer vertikalen Projektion der Grundfläche der Lackierkabine angeordnet.

Um zu vermeiden, dass sich Nasslack-Overspray aus dem Abluftstrom bereits an den Begrenzungswänden des verengten Bereichs niederschlägt, ist es von Vorteil, wenn die Ausdehnung des verengten Bereiches in der Strömungsrichtung des Abluftstroms kürzer ist als ungefähr 6 m, vorzugsweise kürzer ist als ungefähr 1 m, insbesondere kürzer ist als ungefähr 0,5 m.

Wenn der Applikationsbereich in einer Lackierkabine mit einer Längsrichtung angeordnet ist, so erstreckt sich der verengte Bereich vorzugsweise in der Längsrichtung der Lackierkabine über im Wesentlichen die gesamte Länge der Lackierkabine.

Dabei kann der verengte Bereich in der Längsrichtung der Lackierkabine in mehrere verengte Teil-Bereiche unterteilt sein.

Alternativ hierzu kann auch vorgesehen sein, dass der verengte Bereich in der Längsrichtung der Lackierkabine nicht unterteilt ist.

Wenn der Applikationsbereich in einer Lackierkabine mit einer Querrichtung angeordnet ist, so kann vorgesehen sein, dass der verengte Bereich in der Querrichtung der Lackierkabine in mehrere verengte Teil-Bereiche unterteilt ist.

Alternativ hierzu kann auch vorgesehen sein, dass der verengte Bereich in der Querrichtung der Lackierkabine nicht unterteilt ist.

Der Eintritt des Abluftstroms in den verengten Bereich ist vorzugsweise oberhalb des mindestens einen regenerierbaren Oberflächenfilters angeordnet.

Wenn der Applikationsbereich in einer Lackierkabine mit einer Querrichtung angeordnet ist, so weist der kleinste von dem Abluftstrom durchströmte Querschnitt des verengten Bereichs vorzugsweise eine Ausdehnung in der Querrichtung der Lackierkabine auf, welche höchstens ungefähr 20 % der Ausdehnung der Lackierkabine in der Querrichtung der Lackierkabine beträgt.

Um das mindestens eine regenerierbare Oberflächenfilter vor Beschädigungen zu schützen, ist es günstig, wenn vertikal über dem mindestens einen regenerierbaren Oberflächenfilter mindestens ein Abschirmelement angeordnet ist, das ein senkrechtes Herabfallen von Gegenständen, Schmutz und/oder Lackpartikeln aus dem Applikationsbereich auf das regenerierbare Oberflächenfilter verhindert.

Dabei kann vorgesehen sein, dass das mindestens eine Abschirmelement eine Begrenzung des verengten Bereiches bildet.

Um günstige Strömungsverhältnisse im Strömungsweg des Abluftstroms zu erzielen, ist es günstig, wenn die Vorrichtung mindestens ein Strömungsleitelement umfasst, das zumindest einen Teil des Abluftstroms zu dem verengten Bereich hin leitet.

Dabei kann das Strömungsleitelement eine zumindest abschnittsweise im Wesentlichen horizontal ausgerichtete Strömungsleitfläche aufweisen. Alternativ hierzu kann auch vorgesehen sein, dass das Strömungsleitelement eine zumindest abschnittsweise gegen die Horizontale, vorzugsweise zu dem verengten Bereich hin, geneigte Strömungsleitfläche aufweist.

Wenn die Vorrichtung einen Boden aufweist, welcher den Strömungsweg des Abluftstroms nach unten hin begrenzt, so kann vorgesehen sein, dass zumindest ein Teil des Bodens durch einen von dem vom Abluftstrom durchströmten Bereich der Vorrichtung abgetrennten Bereich abgedeckt ist. Auf diese Weise wird die Bodenfläche reduziert, welche durch vor Erreichen des mindestens einen Oberflächenfilters aus dem Abluftstrom abgetrennten Nasslack-Overspray verunreinigt wird. Dabei kann vorgesehen sein, dass eine obere Begrenzungswand des von dem vom Abluftstrom durchströmten Bereich der Vorrichtung abgetrennten Bereichs zumindest einen Teil eines Strömungsleitelements bildet, das zumindest einen Teil des Abluftstroms zu dem verengten Bereich hin leitet.

Wenn der Applikationsbereich in einer Lackierkabine angeordnet ist und die Vorrichtung mindestens einen Abluftkanal umfasst, in welchen zumindest ein Teil des Abluftstroms nach dem Passieren der Abtrennvorrichtung eintritt, so wird ein besonders platzsparender Aufbau der Vorrichtung erzielt, wenn der Abluftkanal innerhalb einer vertikalen Projektion der Grundfläche der Lackierkabine angeordnet ist.

Um das Abreinigen des regenerierbaren Oberflächenfilters zu erleichtern, ist es günstig, wenn das mindestens eine regenerierbare Oberflächenfilter eine ein Precoat-Material umfassende Sperrschicht aufweist, welche ein Verkleben der Filteroberfläche verhindert.

Um die Sperrschicht aus Precoat-Material an dem Oberflächenfilter zu erzeugen, kann vorgesehen sein, dass die Vorrichtung mindestens eine Precoat-Zuführeinrichtung umfasst, welche ein Precoat-Material in den Abluftstrom abgibt.

Dabei kann die Abgabe von Precoat-Material in den Abluftstrom kontinuierlich oder intervallweise erfolgen.

Als Precoat-Materialien kommen beispielsweise Kalk, Aluminiumsilikate, Aluminiumoxide, Siliziumoxide, Pulverlack oder ähnliches in Betracht.

Grundsätzlich ist jedes Medium als Precoat-Material geeignet, das dazu in der Lage ist, den Flüssigkeitsanteil des Nasslack-Oversprays aufzunehmen.

Grundsätzlich kann die Precoat-Zuführeinrichtung beispielsweise unmittelbar vor dem mindestens einen regenerierbaren Oberflächenfilter angeordnet sein.

Ferner ist es möglich, die mindestens eine Precoat-Zuführeinrichtung im unmittelbaren Anschluss an den Applikationsbereich, beispielsweise im Bodenbereich der Lackierkabine, anzuordnen.

Besonders günstig ist es jedoch, wenn die mindestens eine Precoat-Zuführeinrichtung an dem verengten Bereich des Strömungswegs des Abluftstroms angeordnet ist. Im verengten Bereich des Strömungswegs des Abluftstroms herrschen besonders hohe Strömungsgeschwindigkeiten, so dass durch die Zuführung des Precoat-Materials an dieser Stelle eine besonders gute Precoat-Verteilung in dem Abluftstrom durch Venturi-Verwirbelung erzielt wird.

Beim Precoatieren besteht auch die Möglichkeit des Zwischen-Precoatierens, wobei ohne vorheriges Abreinigen des Oberflächenfilters neues Precoat-Material aufgebracht wird, um das spätere Abreinigungsverhalten des Oberflächenfilters zu verbessern.

Das mindestens eine regenerierbare Oberflächenfilter der Abtrennvorrichtung ist vorzugsweise intervallweise abreinigbar.

Alternativ oder ergänzend hierzu kann vorgesehen sein, dass das mindestens eine regenerierbare Oberflächenfilter im Betrieb der Vorrichtung eine feuchte Oberfläche aufweist.

Das Oberflächenfilter kann beispielsweise durch Spül- oder Befeuchtungsmedien wie VE-Wasser, Butylglykol oder andere Lösemittel feucht gehalten werden, um die Abreinigung des Oberflächenfilters zu erleichtern.

Diese Befeuchtungsmedien können an denselben Stellen in den Abluftstrom eingebracht werden wie die vorstehend erläuterten Precoat-Materialien.

Für eine gründliche Abreinigung der Filteroberfläche des Oberflächenfilters ist es günstig, wenn die Oberfläche des mindestens einen regenerierbaren Oberflächenfilters kontinuierlich oder intervallweise abspülbar ist.

Alternativ oder ergänzend hierzu kann vorgesehen sein, dass das mindestens eine regenerierbare Oberflächenfilter durch Druckluftimpulse abreinigbar ist.

Ein besonders energiesparender Betrieb der Lackieranlage wird ermöglicht, wenn die Vorrichtung einen Umluftkreislauf aufweist, in welchem der Abluftstrom, aus welchem der Nasslack-Overspray abgetrennt worden ist, zumindest teilweise erneut dem Applikationsbereich zugeführt wird.

Anspruch 8 ist auf die Verwendung einer Anlage mit den im Anspruch genannten Merkmalen zum Lackieren von Gegenständen, insbesondere von Fahrzeugkarosserien, gerichtet.

Weitere Merkmale und Vorteile der Erfindung sind Gegenstand der nachfolgenden Beschreibung und der zeichnerischen Darstellung von Ausführungsbeispielen.

In den Zeichnungen zeigen:

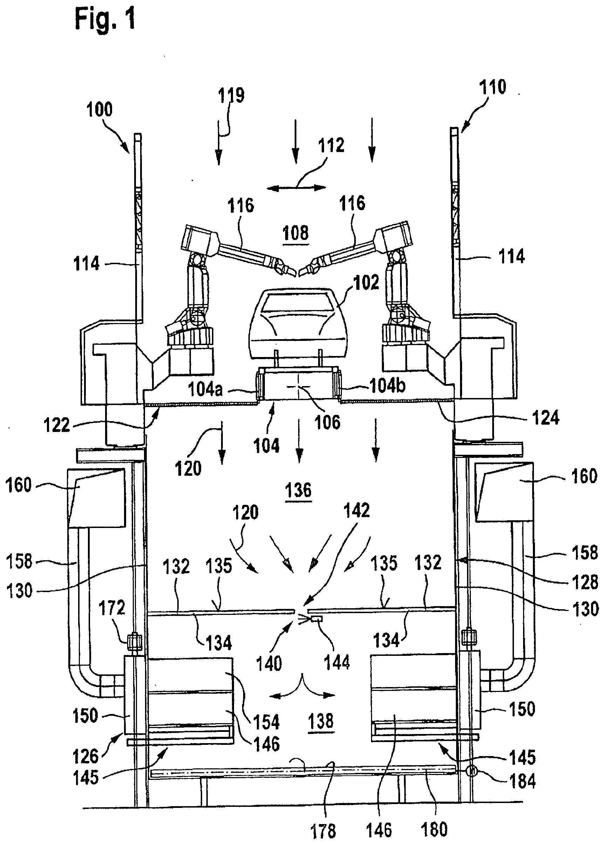

- Fig. 1: einen schematischen vertikalen Querschnitt durch eine erste Ausführungsform einer Lackierkabine mit einer darunter angeordneten Vorrichtung zum Abtrennen von Nasslack-Overspray aus einem Overspray-Partikel enthaltenden Abluftstrom, welche zwei Abtrennvorrichtungen zum Abtrennen des Oversprays aus dem Abluftstrom sowie zwei Abluftkanäle umfasst, welche seitlich links bzw. rechts neben dem Grundriss der Lakkierkabine verlaufen, wobei zwischen einem Applikationsbereich der Lackierkabine und den Abtrennvorrichtungen ein verengter Bereich des Strömungswegs des Abluftstroms vorgesehen ist, welcher durch horizontal ausgerichtete Strömungsleitelemente begrenzt ist;
- Fig. 2: eine schematische Seitenansicht der Anlage aus Fig. 1;
- Fig. 3: eine schematische Draufsicht von oben auf die Anlage aus den Fig. 1 und 2;
- Fig. 4: eine schematische perspektivische Darstellung der Anlage aus den Fig. 1 bis 3;
- Fig. 5: eine schematische Darstellung eines Umluftkreislaufs der Anlage aus den Fig. 1 bis 4;
- Fig. 6: eine schematische perspektivische Darstellung eines regenerierbaren Oberflächenfilters der Anlage aus den Fig. 1 bis 5;
- Fig. 7: einen schematischen Längsschnitt durch das Oberflächenfilter aus Fig. 6, welcher einen Abreinigungsvorgang des Oberflächenfilters illustriert;
- Fig. 8: eine schematische perspektivische Darstellung einer alternativen Ausführungsform eines regenerierbaren Oberflächenfilters;
- Fig. 9: einen schematischen Querschnitt durch das Oberflächenfilter aus Fig. 8, welcher einen Abreinigungsvorgang des Oberflächenfilters illustriert;
- Fig. 10: eine schematische Draufsicht von oben auf das Oberflächenfilter aus den Fig. 8 und 9;

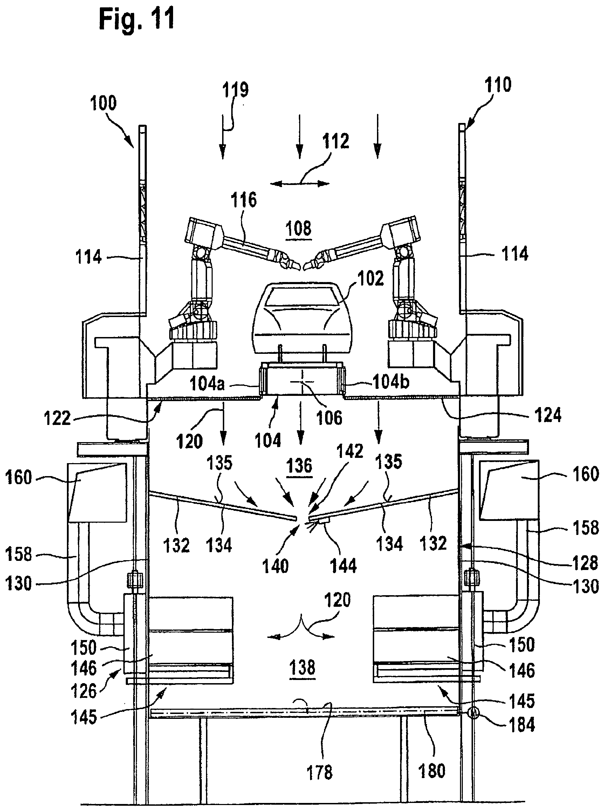

- Fig. 11: einen schematischen Querschnitt durch eine zweite Ausführungsform einer Lackierkabine mit einer darunter angeordneten Vorrichtung zum Abtrennen von Nasslack-Overspray aus einem Overspray-Partikel enthaltenden Abluftstrom, welche zwei Abtrennvorrichtungen zum Abtrennen des Oversprays aus dem Abluftstrom und zwei seitlich neben dem Grundriss der Lakkierkabine verlaufende Abluftkanäle umfasst, wobei zwischen einem Applikationsbereich der Lackierkabine und den Abtrennvorrichtungen ein verengter Bereich des Strömungswegs des Abluftstroms vorgesehen ist, welcher durch gegen die Horizontale geneigte Strömungsleitelemente begrenzt ist;
- Fig. 12: eine schematische Seitenansicht der Anlage aus Fig. 11;
- Fig. 13: eine schematische Draufsicht von oben auf die Anlage aus den Fig. 11 und 12;
- Fig. 14: eine schematische perspektivische Darstellung der Anlage aus den Fig. 11 bis 13;

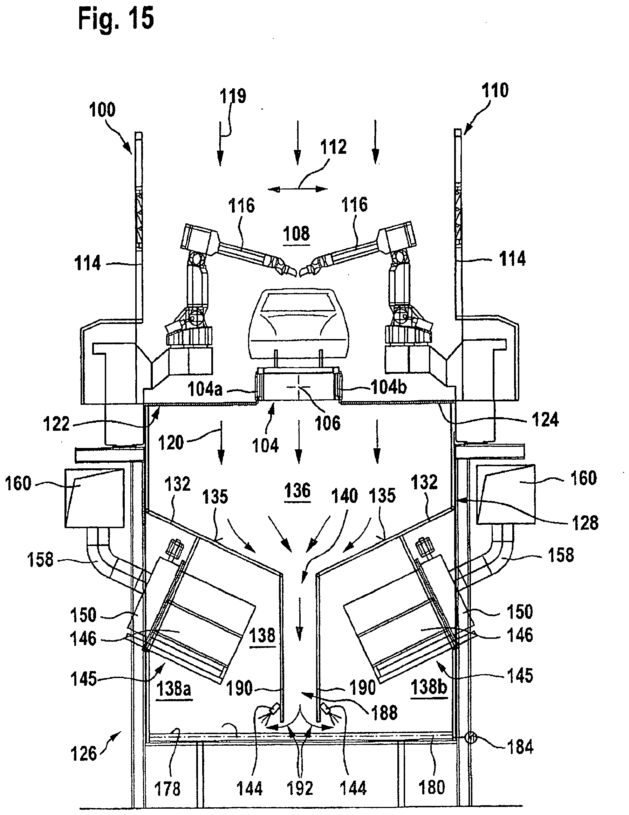

- Fig. 15: einen schematischen Querschnitt durch eine dritte Ausführungsform einer Lackierkabine mit einer darunter angeordneten Vorrichtung zum Abtrennen von Nasslack-Overspray aus einem Overspray-Partikel enthaltenden Abluftstrom, welche zwei Abtrennvorrichtungen zum Abtrennen des Oversprays aus dem Abluftstrom und zwei seitlich neben dem Grundriss der Lakkierkabine verlaufende Abluftkanäle umfasst, wobei zwischen einem Applikationsbereich der Lackierkabine und den Abtrenneinrichtungen ein verengter Bereich des Strömungswegs des Abluftstroms in Form eines sich in vertikaler Richtung erstreckenden Schachtes vorgesehen ist;
- Fig. 16: eine schematische Seitenansicht der Anlage aus Fig. 15;
- Fig. 17: eine schematische Draufsicht von oben auf die Anlage aus den Fig. 15 und 16;
- Fig. 18: eine schematische perspektivische Darstellung der Anlage aus den Fig. 15 bis 17;
- Fig. 19: einen schematischen Querschnitt durch eine vierte Ausführungs- form einer Lackierkabine mit einer darunter angeordneten Vor- richtung zum Abtrennen von Nasslack-Overspray aus einem Over- spray-Partikel enthaltenden Abluftstrom, welche eine Abtrennvor- richtung zum Abtrennen des Oversprays aus dem Abluftstrom und einen innerhalb einer vertikalen Projektion der Grundfläche der Lackierkabine angeordneten Abluftkanal umfasst;
- Fig. 20: eine schematische Seitenansicht der Anlage aus Fig. 19;
- Fig. 21: eine schematische Draufsicht von oben auf die Anlage aus den Fig. 19 und 20; und
- Fig. 22: eine schematische perspektivische Darstellung der Anlage aus den Fig. 19 bis 21.

Gleiche oder funktional äquivalente Elemente sind in allen Figuren mit denselben Bezugszeichen bezeichnet.

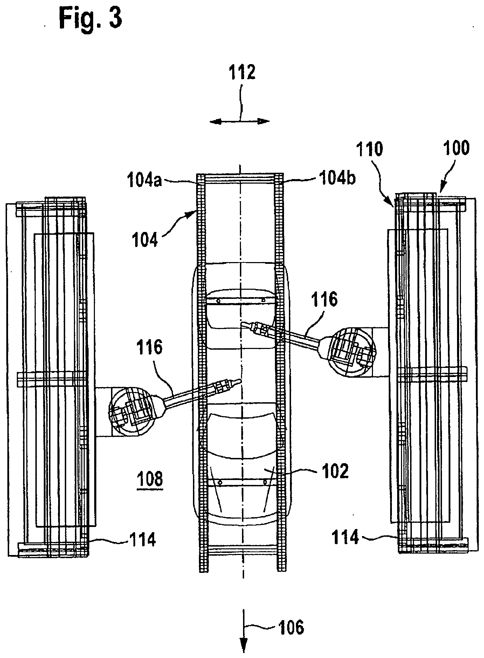

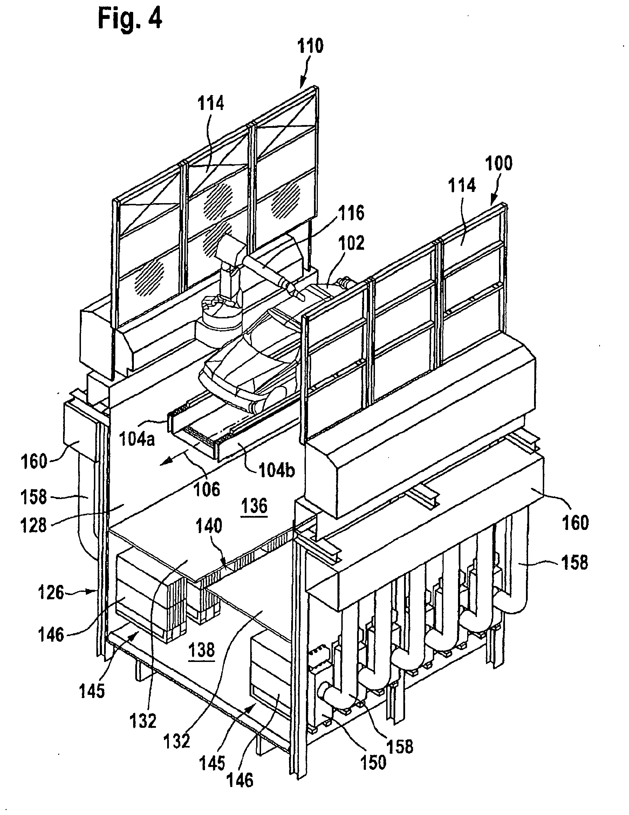

Eine in den Fig. 1 bis 7 dargestellte, als Ganzes mit 100 bezeichnete Anlage zum Spritzlackieren von Fahrzeugkarosserien 102 umfasst eine rein schematisch dargestellte Fördervorrichtung 104, mittels welcher die Fahrzeugkarosserien 102 längs einer Förderrichtung 106 durch einen Applikationsbereich 108 einer als Ganzes mit 110 bezeichneten Lackierkabine bewegt werden können.

Die Fördervorrichtung 104 kann beispielsweise als invertierter Kreisförderer oder auch als invertierter Einschienenförderer ausgebildet sein.

Insbesondere kann die Fördervorrichtung 104 zweiteilig ausgebildet sein und - wie am besten aus den Fig. 1, 3 und 4 zu ersehen ist - zwei sich parallel zur Förderrichtung 106 erstreckende Förderstränge 104a und 104b umfassen, welche in einer zur Förderrichtung 106 senkrechten horizontalen Richtung voneinander beabstandet sind.

Der Applikationsbereich 108 ist der Innenraum der Lackierkabine 110, welche in ihrer senkrecht zur Förderrichtung 106, die der Längsrichtung der Lackierkabine 110 entspricht, verlaufenden horizontalen Querrichtung 112 zu beiden Seiten der Fördervorrichtung 104 durch jeweils eine Kabinenwand 114 begrenzt ist.

Zu beiden Seiten der Fördervorrichtung 104 sind in der Lackierkabine 110 Spritzlackiereinrichtungen 116 (siehe Fig. 1 bis 4) angeordnet, beispielsweise in Form von Lackierrobotern.

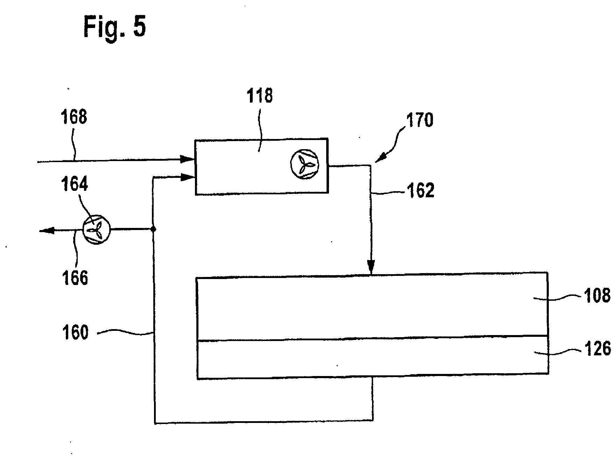

Mittels einer in Fig. 5 schematisch dargestellten Luftstromerzeugungseinrichtung 118 wird ein Luftstrom erzeugt, welcher den Applikationsbereich 108 im Wesentlichen vertikal von oben nach unten durchsetzt, wie dies in Fig. 1 durch die Pfeile 119 angedeutet ist.

Dieser Luftstrom nimmt im Applikationsbereich 108 Lack-Overspray in Form von Overspray-Partikeln auf.

Der Begriff "Partikel" umfasst dabei sowohl feste als auch flüssige Teilchen, insbesondere Tröpfchen.

Wird in der Anlage 100 ein Nasslack zum Lackieren verwendet, so besteht der Nasslack-Overspray aus Lacktröpfchen.

Die meisten der Overspray-Partikel weisen eine größte Abmessung im Bereich von ungefähr 1 µm bis ungefähr 100 µm auf.

Der durch die Pfeile 120 dargestellte Abluftstrom verläßt die Lackierkabine 110 durch einen Kabinenboden 122, welcher durch luftdurchlässige Gitterroste 124 gebildet ist.

Die Anlage 100 umfasst ferner eine als Ganzes mit 126 bezeichnete Vorrichtung zum Abtrennen von Nasslack-Overspray aus dem Luftstrom 120, welche unterhalb des Applikationsbereichs 108 angeordnet ist.

Die Vorrichtung 126 umfasst eine im Wesentlichen quaderförmige Strömungskammer 128, welche sich in der Förderrichtung 106 über die ganze Länge der Lackierkabine 110 hinweg erstreckt und in der Querrichtung 112 der Lackierkabine 110 durch vertikale Seitenwände 130 begrenzt ist, die im Wesentlichen mit den seitlichen Kabinenwänden 114 der Lackierkabine 110 fluchten, so dass die Strömungskammer 128 im Wesentlichen dieselbe horizontale Querschnittsfläche aufweist wie die Lackierkabine 110 und im Wesentlichen vollständig innerhalb der vertikalen Projektion der Grundfläche der Lackierkabine 110 angeordnet ist.

Die Strömungskammer 128 ist durch Strömungsleitelemente 132, welche in diesem Ausführungsbeispiel als im Wesentlichen horizontal ausgerichtete Strömungsleitbleche 134 ausgebildet sind, in einen oberen Abschnitt 136 und einen unteren Abschnitt 138 unterteilt.

Der obere Abschnitt 136 und der untere Abschnitt 138 der Strömungskammer 128 sind durch einen verengten Bereich 140 miteinander verbunden, welcher die Form eine Spaltes 142 zwischen den einander gegenüberliegenden freien Rändern der Strömungsleitelemente 132 aufweist und eine Engstelle im Strömungsweg des Abluftstroms 120 durch die Strömungskammer 128 bildet.

Die Oberseiten der Strömungsleitelemente 132 bilden jeweils eine Strömungsleitfläche 135, welche den Abluftstrom 120 zu dem verengten Bereich 140 hin leitet.

Am verengten Bereich 140 des Strömungsweges ist eine Precoat-Zuführeinrichtung 144 angeordnet, welche kontinuierlich oder intervallweise ein Precoat-Material in den Abluftstrom 120 abgibt.

Die Precoat-Zuführeinrichtung 144 kann beispielsweise als eine Precoat-Sprühdüse ausgebildet sein, welche das Precoat-Material in Form eines Sprühnebels in den Abluftstrom 120 abgibt.

Die Anordnung der Precoat-Zuführeinrichtung 144 an dem verengten Bereich 140 des Strömungswegs des Abluftstroms 120 bietet den Vorteil, dass dort aufgrund der erhöhten Strömungsgeschwindigkeit des Abluftstroms 120 und aufgrund des kleinen Durchtrittsquerschnittes Turbulenzen in der Abluftströmung entstehen, welche für eine Verwirbelung des Precoat-Materials in dem Abluftstrom 120 und somit für eine besonders gute Verteilung des Precoat-Materials in dem Abluftstrom 120 sorgen.

Die Precoat-Zuführeinrichtung 144 ist an eine (nicht dargestellte) Precoat-Zuführleitung angeschlossen, welche das Precoat-Material in fließfähigem Zustand mittels einer (nicht dargestellten) Precoat-Zuführpumpe aus einem (nicht dargestellten) Precoat-Speicherbehälter zuführt.

Als Precoat-Material kann grundsätzlich jedes Medium verwendet werden, welches dazu in der Lage ist, den Flüssigkeitsanteil des Nasslack-Oversprays aufzunehmen.

Insbesondere kommen als Precoat-Materialien beispielsweise Kalk, Aluminiumsilikate, Aluminiumoxide, Siliziumoxide, Pulverlack oder ähnliches in Betracht.

Um das Precoat-Material fließfähig und sprühbar zu machen, werden beispielsweise wäßrige Dispersionen der genannten Materialien verwendet.

Wenn die auf die Precoat-Zuführeinrichtung 144 folgenden Filter nicht precoated, sondern lediglich befeuchtet werden sollen, kann mittels der Precoat-Zuführeinrichtung 144 auch lediglich ein Befeuchtungsmedium in den Abluftstrom 120 eingebracht werden.

Als solche Befeuchtungsmedien kommen insbesondere beispielsweise VE-Wasser, Butylglykol oder andere Lösungsmittel in Betracht.

Im unteren Abschnitt 138 der Strömungskammer 128 ist zu beiden Seiten des verengten Bereichs 140 jeweils eine Abtrennvorrichtung 145 zum Abtrennen von Nasslack-Overspray aus dem Abluftstrom 120 vorgesehen. Die Abtrennvorrichtungen 145 umfassen jeweils mehrere, an den beiden einander gegenüberliegenden vertikalen Seitenwänden 130 der Strömungskammer 128 angeordnete, in der Förderrichtung 106 voneinander beabstandete regenerierbare Oberflächenfilter 146, welche mit ihren Filterelementen 148 in den unteren Abschnitt 138 der Strömungskammer 128 hineinragen (siehe insbesondere die Fig. 1, 2 und 4).

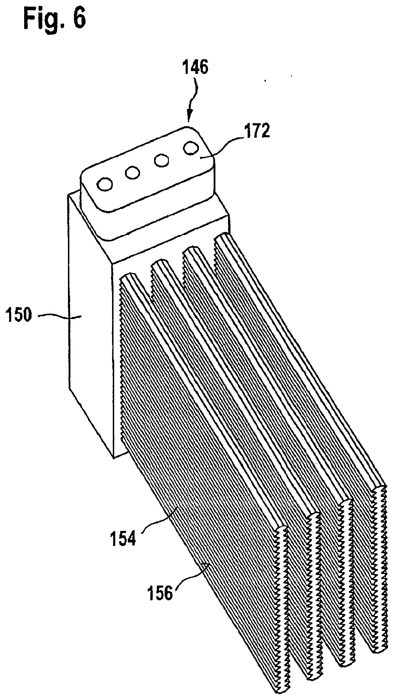

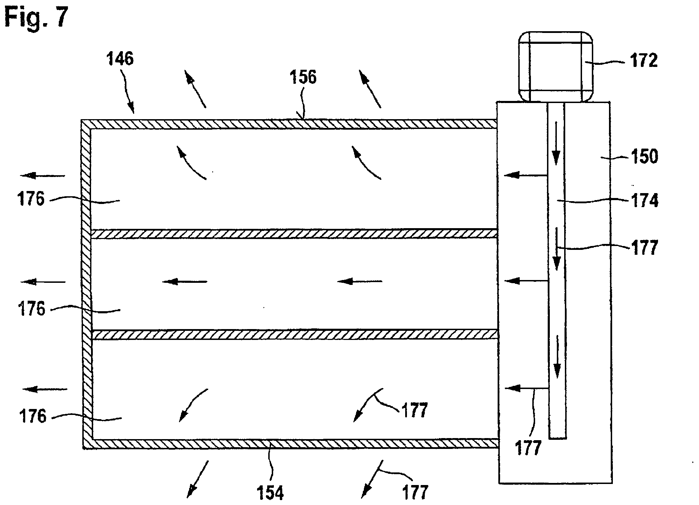

Eines dieser regenerierbaren Oberflächenfilter 146 ist in den Fig. 6 und 7 im Detail dargestellt.

Jedes der regenerierbaren Oberflächenfilter 146 umfasst einen hohl ausgebildeten Grundkörper 150, an welchem mehrere, beispielsweise jeweils vier, Filterelemente 154 gehalten sind.

Die Filterelemente 154 sind beispielsweise im Wesentlichen plattenförmig ausgebildet und weisen, wie aus Fig. 6 zu ersehen ist, vorzugsweise einen gezackten Querschnitt auf, um die zur Verfügung stehende Filteroberfläche 156 zu vergrößern.

Die Filterelemente 154 können beispielsweise als Platten aus gesintertem Polyethlyen, die an ihrer Außenfläche mit einer Membran aus Polytetrafluorethylen (PTFE) versehen sind, ausgebildet sein.

Alternativ oder ergänzend hierzu kann auch vorgesehen sein, dass die Filterelemente 154 aus einem Vliesstoff mit einer PTFE-Beschichtung gebildet sind. Die Beschichtung aus PTFE dient jeweils dazu, die Filterklasse des Oberflächenfilters 146 zu erhöhen (d.h. dessen Durchlässigkeit zu verringern) und ferner das permanente Anhaften des aus dem Abluftstrom 120 abgetrennten Nasslack-Oversprays zu verhindern.

Sowohl das Grundmaterial der Filterelemente 154 als auch deren PTFE-Beschichtung weisen eine Porosität auf, so dass die Abluft durch die Poren in den Innenraum 176 des jeweiligen Filterelements 154 gelangen kann.

Um das Verkleben der Filteroberfläche 156 zu verhindern, ist dieselbe ferner mit einer Sperrschicht aus dem in den Abluftstrom abgegebenen Precoat-Material versehen.

Diese Sperrschicht bildet sich im Betrieb der Vorrichtung 126 einfach durch Abscheidung des in den Abluftstrom 120 abgegebenen Precoat-Materials an der Filteroberfläche 156.

Vorzugsweise wird die Menge des in den Abluftstrom 120 abgegebenen Precoat-Materials so bemessen, dass die Dicke der Sperrschicht aus dem Precoat-Material auf den Filterelementen 154 der regenerierbaren Oberflächenfilter 146 im Bereich von beispielsweise ungefähr 150 µm bis 200 µm liegt.

Der Abluftstrom 120 überstreicht die Filteroberflächen 156 der Filterelemente 154 des regenerierbaren Oberflächenfilters 146, wobei sowohl das mitgeführte Precoat-Material als auch der mitgeführte Nasslack-Overspray an den Filteroberflächen 156 abgeschieden werden, und gelangt durch die porösen Filteroberflächen 156 in die Innenräume 176 der Filterelemente 154, die mit dem Hohlraum innerhalb des Grundkörpers 150 verbunden sind.

Der gereinigte Abluftstrom 120 gelangt somit durch den Grundkörper 150 in jeweils ein Abluftrohr 158, welches von dem jeweiligen regenerierbaren Oberflächenfilter 146 zu einem seitlich neben einer vertikalen Seitenwand 130 der Strömungskammer 128 parallel zur Förderrichtung 106 verlaufenden Abluftkanal 160 führt.

Wie aus der schematischen Darstellung der Fig. 5 zu ersehen ist, gelangt die von dem Nasslack-Overspray gereinigte Abluft aus den beiden Abluftkanälen 160 zumindest teilweise zurück zu der Luftstromerzeugungseinrichtung 118, welche die gereinigte Abluft über eine Zuführleitung 162 erneut dem Applikationsbereich 108 in der Lackierkabine 110 zuführt.

Ein anderer Teil des gereinigten Abluftstroms wird über ein Abluftgebläse 164 in einer Abluftleitung 166 an die Umgebung abgegeben.

Dieser an die Umgebung abgegebene Teil des Abluftstroms wird durch Frischluft ersetzt, welche der Luftstromerzeugungseinrichtung 118 über eine Frischluftzuführleitung 168 zugeführt wird.

Der Großteil der durch den Applikationsbereich 108 hindurchgeführten Luft wird somit in einem Umluftkreislauf 170 geführt, welcher die Luftstromerzeugungseinrichtung 118, die Zuführleitung 162, den Applikationsbereich 108, die Strömungskammer 128 und die Abluftkanäle 160 umfasst, wodurch eine ständige Aufheizung frisch zugeführter Zuluft vermieden und somit die Energiekosten deutlich gesenkt werden.

Da die Abtrennung des Nasslack-Oversprays aus dem Abluftstrom 120 mittels der regenerierbaren Oberflächenfilter 146 trocken, d.h. ohne Auswaschung mit einer Reinigungsflüssigkeit, erfolgt, wird die im Umluftkreislauf 170 geführte Luft beim Abtrennen des Nasslack-Oversprays nicht befeuchtet, so dass auch keinerlei Vorrichtungen zur Entfeuchtung der im Umluftkreislauf 170 geführten Luft erforderlich sind.

Ferner sind auch keine Vorrichtungen zur Abtrennung von Nasslack-Overspray aus einer Auswasch-Reinigungsflüssigkeit erforderlich.

Die regenerierbaren Oberflächenfilter 146 werden in bestimmten Zeitintervallen, wenn ihre Beladung mit Nasslack-Overspray ein vorgegebenes Maß erreicht hat, durch Druckluftimpulse abgereinigt.

Diese Abreinigung kann beispielsweise einmal pro Arbeitsschicht, d.h. zweimal bis dreimal pro Arbeitstag, erfolgen.

Die erforderlichen Druckluftimpulse werden mittels eines Druckluftspeichers 172 erzeugt, welcher an dem Grundkörper 150 des jeweiligen regenerierbaren Oberflächenfilters 146 angeordnet ist und dazu in der Lage ist, Druckluftimpulse an Druckluftrohre 174 abzugeben, welche innerhalb des jeweiligen Grundkörpers 150 verlaufen und von dem Druckluftspeicher 172 in die Innenräume 176 der Filterelemente 154 führen.

Von den Innenräumen 176 der Filterelemente 154 gelangen die Druckluftimpulse durch die porösen Filteroberflächen 156 in den Außenraum der Filterelemente 154, wobei die an den Filteroberflächen 156 gebildete Sperrschicht aus Precoat-Material und dem daran abgeschiedenen Nasslack-Overspray von den Filteroberflächen 156 abgelöst wird, so dass die Filteroberflächen 156 in ihren abgereinigten Ursprungszustand zurückversetzt werden. Die Strömungsrichtung der Druckluft durch ein regenerierbares Oberflächenfilter 146 beim Abreinigen ist in Fig. 7 durch die Pfeile 177 dargestellt.

Der Druckluftvorrat in den Druckluftspeichern 172 wird über (nicht dargestellte) Druckluftzuführleitungen aus einem bauseitig vorhandenen Druckluftnetz ergänzt.

Alternativ oder ergänzend zu einer Abreinigung durch Druckluftimpulse kann auch vorgesehen sein, dass die regenerierbaren Oberflächenfilter 146 mittels einer geeigneten Spüleinrichtung in vorgegebenen Intervallen abgespült werden, um den an den Filteroberflächen 156 abgeschiedenen Nasslack-Overspray zu entfernen.

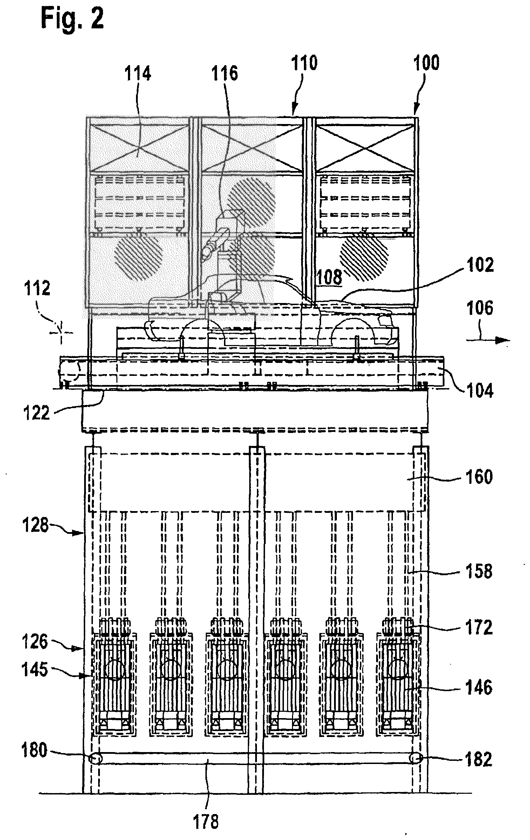

Wie am besten aus den Fig. 1 und 2 zu ersehen ist, gelangt das von den Filteroberflächen 156 der regenerierbaren Oberflächenfilter 146 abgereinigte Material auf ein am Boden der Strömungskammer 128 angeordnetes Sammelband 178, das beispielsweise als ein über eine angetriebene Rolle 180 und eine nicht angetriebene Umlenkrolle 182 umlaufendes, endloses Band ausgebildet ist.

Die angetriebene Rolle 180 wird mittels eines Antriebsmotors 184 in Drehung versetzt, um das Sammelband 178 längs der Förderrichtung 106 in Bewegung zu versetzen.

Auf diese Weise wird mittels des Sammelbandes 178 das von den regenerierbaren Oberflächenfiltern 146 auf die Oberfläche des Sammelbands 178 gelangte Material, welches Precoat-Material und abgeschiedenen Nasslack-Overspray umfasst, zu einer (nicht dargestellten) Abscheidevorrichtung transportiert, von welcher dieses Material (beispielsweise mittels Abstreifern) von dem Sammelband 178 gelöst, gesammelt und gegebenenfalls einer Weiterverwendung zugeführt wird.

Das Sammelband 178 nimmt auch einen Teil des Nasslack-Oversprays auf, welcher direkt aus dem Abluftstrom 120 auf das Sammelband 178 gelangt, bevor der Abluftstrom 120 die regenerierbaren Oberflächenfilter 146 erreicht.

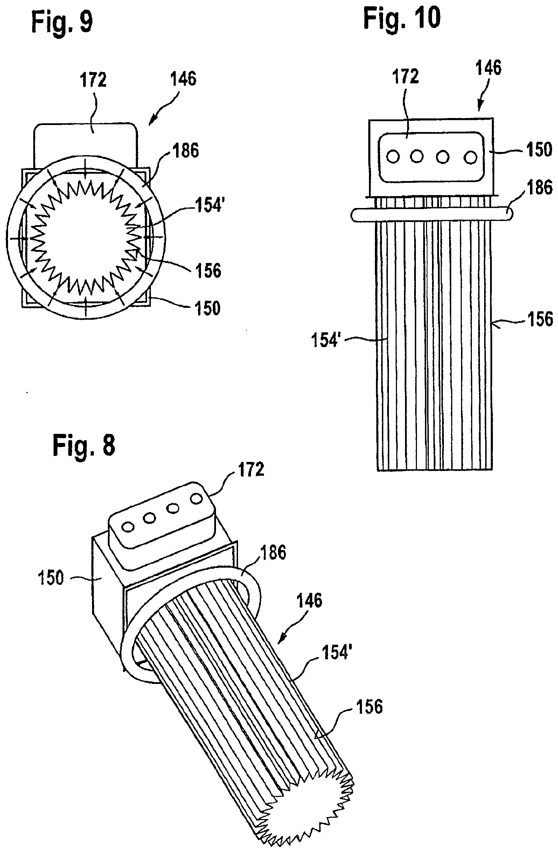

Eine alternative Ausgestaltung der regenerierbaren Oberflächenfilter 146, welche in der Vorrichtung 126 verwendbar sind, ist in den Fig. 8 bis 10 dargestellt.

Das in den Fig. 8 bis 10 dargestellte regenerierbare Oberflächenfilter 146 umfasst statt einer Mehrzahl vertikal ausgerichteter, nebeneinander angeordneter plattenförmiger Filterelemente ein im Wesentlichen zylindrisches Filterelement 154', das zur Vergrößerung der zur Verfügung stehenden Filteroberfläche 156 ebenfalls eine im Querschnitt gesehen gezackte Filteroberfläche 156 aufweist.

Zusätzlich zur Erzeugung der Druckluftimpulse ist zur Abreinigung des regenerierbaren Oberflächenfilters 146 bei dieser Ausführungsform eine Spülflüssigkeits-Ringleitung 186 vorgesehen, welche eine Spülflüssigkeit durch an der radialen Innenseite der Spülflüssigkeits-Ringleitung 186 vorgesehene Spülflüssigkeits-Austrittsöffnungen gegen die Filteroberfläche 156 des Filterelements 154' spritzt, so dass die Spülflüssigkeit die Sperrschicht und den daran abgeschiedenen Nasslack-Overspray von der Filteroberfläche 156 ablöst und auf das Sammelband 178 befördert.

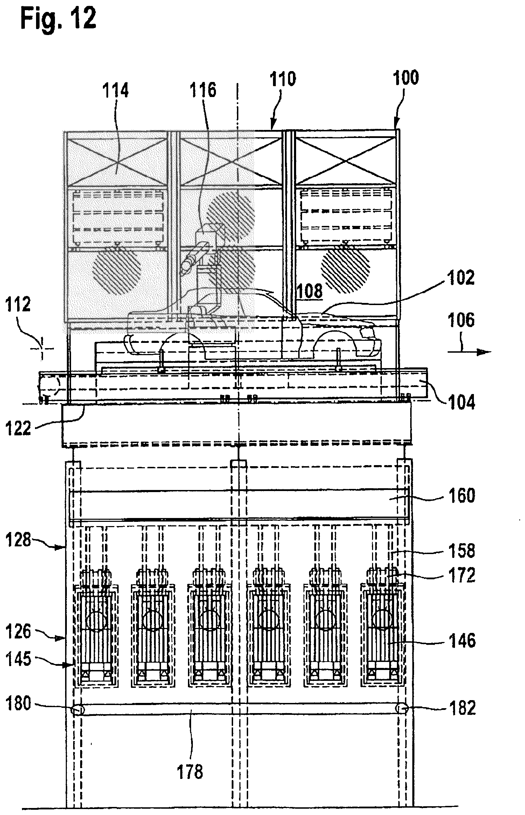

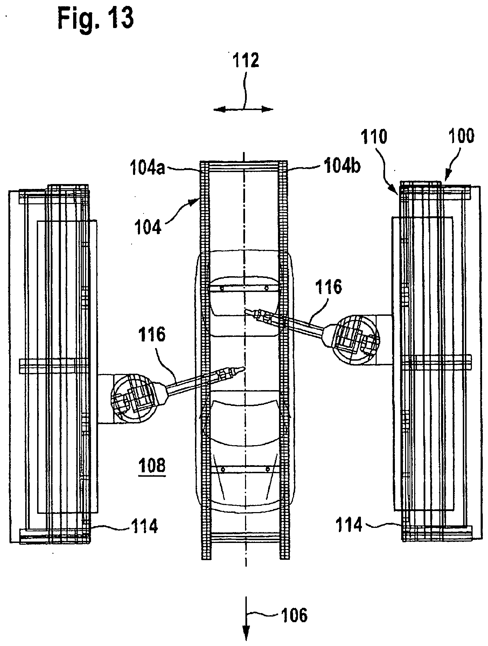

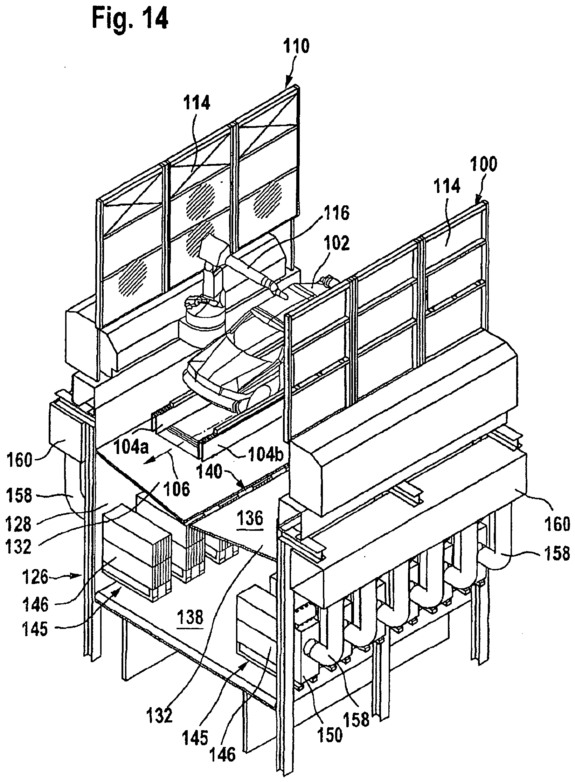

Eine in den Fig. 11 bis 14 dargestellte zweite Ausführungsform einer Anlage 100 zum Lackieren von Fahrzeugkarosserien 102 unterscheidet sich von der vorstehend beschriebenen ersten Ausführungsform dadurch, dass die Strömungsleitelemente 132, welche den unteren Abschnitt 138 von dem oberen Abschnitt 136 der Strömungskammer 128 der Vorrichtung 126 zum Abtrennen von Nasslack-Overspray trennen, bei dieser zweiten Ausführungsform nicht, wie bei der ersten Ausführungsform, im Wesentlichen horizontal ausgerichtet sind, sondern, wie am besten aus Fig. 11 zu ersehen ist, so gegen die Horizontale geneigt sind, dass sie zu dem verengten Bereich 140 hin abfallen.

Der Neigungswinkel gegen die Horizontale beträgt vorzugsweise ungefähr 5° bis ungefähr 30°.

Durch diese Neigung der Strömungsleitelemente 132 und damit der Strömungsleitflächen 135 an deren Oberseite wird eine trichterförmige Gestalt des unteren Bereichs des oberen Abschnitts 136 der Strömungskammer 128 erzielt, durch welche die Luftströmung zu dem verengten Bereich 140 hin vergleichmäßigt wird und das Ausmaß von Verwirbelungen an der Oberseite der Strömungsleitelemente 132 reduziert wird. Auf diese Weise wird ein geringerer Anteil des Nasslack-Oversprays bereits an den Strömungsleitflächen 135 abgeschieden, bevor der Abluftstrom 120 den unteren Abschnitt 138 der Strömungskammer 128 erreicht.

Ferner sind die Strömungsleitelemente 132 bei der zweiten Ausführungsform etwas höher innerhalb der Strömungskammer 128 angeordnet als bei der ersten Ausführungsform.

Im übrigen stimmt die in den Fig. 11 bis 14 dargestellte zweite Ausführungsform einer Anlage 100 zum Lackieren von Fahrzeugkarosserien 102 hinsichtlich

Aufbau und Funktion mit der in den Fig. 1 bis 10 dargestellten ersten Ausführungsform überein, auf deren vorstehende Beschreibung insoweit Bezug genommen wird.

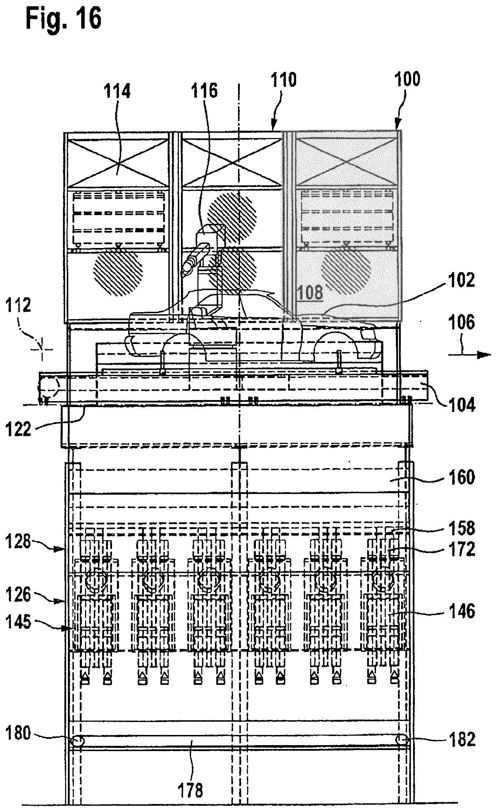

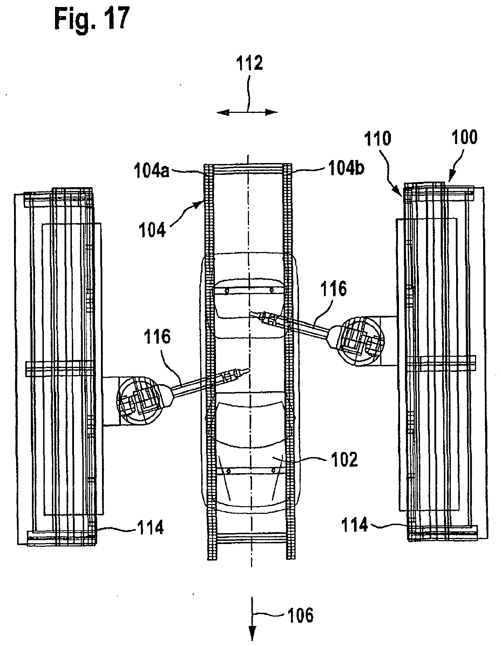

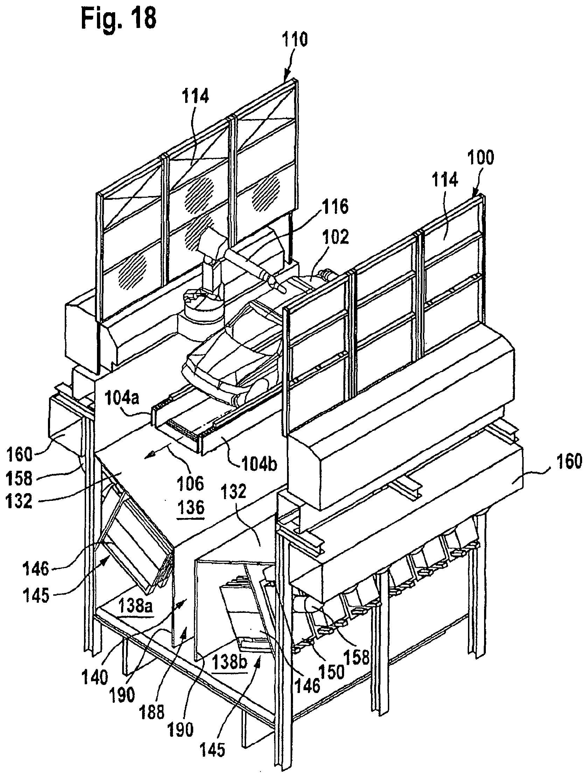

Eine in den Fig. 15 bis 18 dargestellte dritte Ausführungsform einer Anlage 100 zum Lackieren von Fahrzeugkarosserien 102 unterscheidet sich von der vorstehend beschriebenen zweiten Ausführungsform dadurch, dass der verengte Bereich 140 nicht lediglich durch einen Spalt 142 zwischen den einander gegenüberliegenden Rändern der Strömungsleitelemente 132 gebildet ist, sondern einen sich von den einander gegenüberliegenden Rändern der Strömungsleitelemente 132 aus vertikal nach unten erstreckenden Abluftschacht 188 umfasst, der auf seinen beiden Längsseiten durch vertikale, sich in der Förderrichtung 106 erstreckende Schachtseitenwände 190 begrenzt ist.

Zwischen dem unteren Rand jeder Schachtseitenwand 190 und der Oberseite des Sammelbandes 178 am Boden der Strömungskammer 128 ist jeweils ein vertikaler Spalt 192 ausgebildet, durch welchen der Abluftstrom 120 aus dem verengten Bereich 140 in den unteren Abschnitt 138 der Strömungskammer 128 austritt, wobei der untere Abschnitt 138 der Strömungskammer 128 bei dieser Ausführungsform in zwei jeweils auf einer Seite des Abluftschachtes 188 angeordnete Teilbereiche 138a, 138b unterteilt ist.

Ferner erstrecken sich bei dieser Ausführungsform die Filterelemente 154 der regenerierbaren Oberflächenfilter 146 nicht in im Wesentlichen horizontaler Richtung in den unteren Abschnitt 138 der Strömungskammer 128 hinein, sondern sind vielmehr gegen die Horizontale geneigt, und zwar vorzugsweise um ungefähr denselben Winkel wie die Strömungsleitflächen 135 der Strömungsleitelemente 132.

Dieser Neigungswinkel gegenüber der Horizontalen liegt vorzugsweise im Bereich von ungefähr 5° bis ungefähr 30°.

Aufgrund dieser Neigung der Filterelemente 154 der regenerierbaren Oberflächenfilter 146 gegenüber der Horizontalen sind auch die Grundkörper 150 der regenerierbaren Oberflächenfilter 146 und die oberen Bereiche der Seitenwände 130 des unteren Abschnitts 138 der Strömungskammer 128 nicht vertikal ausgerichtet, sondern gegen die Vertikale um einen spitzen Winkel geneigt, welcher dem Neigungswinkel der Filterelemente 154 und der Strömungsleitflächen 135 gegenüber der Horizontalen entspricht.

Bei dieser Ausführungsform sind die regenerierbaren Oberflächenfilter 146 besonders gut gegenüber aus dem Applikationsbereich 108 herabfallenden Gegenständen geschützt.

Außerdem sind durch den Abluftschacht 188 der obere Abschnitt 136 und der untere Abschnitt 138 der Strömungskammer 128 strömungstechnisch voneinander entkoppelt, so dass die Abluftströmung im unteren Abschnitt 138 der Strömungskammer 128 weitgehend von den Strömungsverhältnissen im oberen Abschnitt 136 der Strömungskammer 128 unabhängig ist.

Da bei dieser Ausführungsform zwei Spalte 192 vorhanden sind, durch welche der Abluftstrom 120 in den unteren Abschnitt 138 der Strömungskammer 128 eintritt, sind auch zwei Precoat-Zuführeinrichtungen 144 vorgesehen, welche jeweils benachbart zu einem der vertikalen Spalte 192 am unteren Ende einer der Schachtseitenwände 190 angeordnet sind.

Im übrigen stimmt die in den Fig. 15 bis 18 dargestellte dritte Ausführungsform einer Anlage 100 zum Lackieren von Fahrzeugkarosserien 102 hinsichtlich

Aufbau und Funktion mit der in den Fig. 11 bis 14 dargestellten zweiten Ausführungsform überein, auf deren vorstehende Beschreibung insoweit Bezug genommen wird.

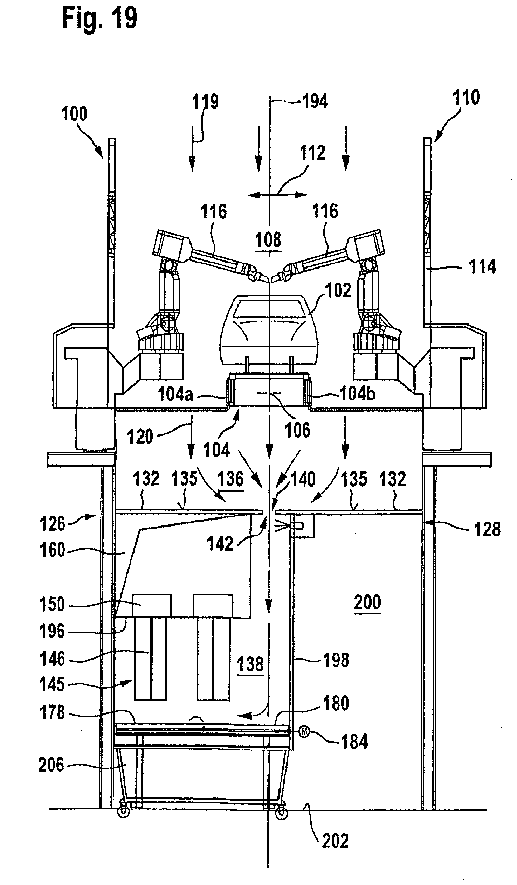

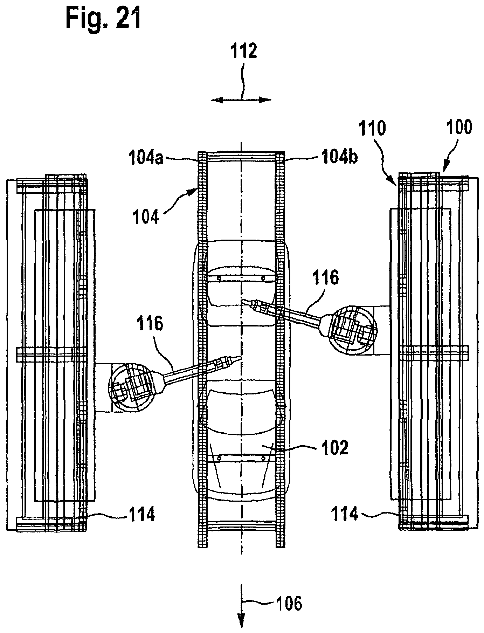

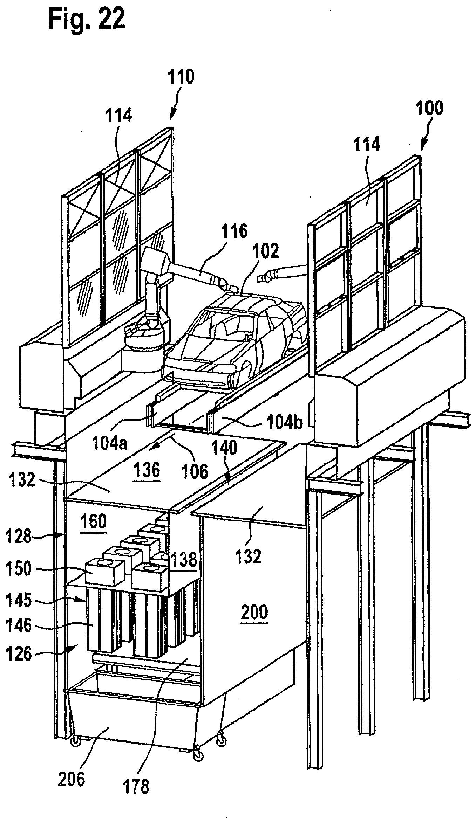

Eine in den Fig. 19 bis 22 dargestellte vierte Ausführungsform einer Anlage 100 zum Spritzlackieren von Fahrzeugkarosserien 102 unterscheidet sich von der vorstehend beschriebenen ersten Ausführungsform dadurch, dass die Vorrichtung 126 zum Abtrennung von Nasslack-Overspray aus dem Abluftstrom 120 nicht symmetrisch zur Längsmittelebene 194 der Lackierkabine 110 ausgebildet ist, sondern asymmetrisch zu dieser Längsmittelebene 194.

Insbesondere sind die regenerierbaren Oberflächenfilter 146 bei dieser Ausführungsform nur auf einer Seite der Längsmittelebene 194 angeordnet (nämlich auf der in Fig. 19 links dargestellten Seite).

Bei dieser Ausführungsform ist nur ein einziger Abluftkanal 160 vorgesehen, welcher überdies nicht seitlich außerhalb der Seitenwand 130 der Strömungskammer 128 angeordnet ist, sondern statt dessen in die Strömungskammer 128 integriert und direkt unter einem der Strömungsleitelemente 132 angeordnet ist, so dass das betreffende Strömungsleitelement 132 eine obere Begrenzung des Abluftkanals 160 bildet.

Die regenerierbaren Oberflächenfilter 146 sind bei dieser Ausführungsform nicht über Abluftrohre 158 mit dem Abluftkanal 160 verbunden, sondern direkt an einer unteren Begrenzungswand 196 des Abluftkanals 160 angeordnet, wobei die Filterelemente 154 der regenerierbaren Oberflächenfilter 146 in im Wesentlichen vertikaler Richtung von der unteren Begrenzungswand 196 des Abluftkanals 160 in den unteren Abschnitt 138 der Strömungskammer 128 herabhängen.

Durch diese hängende Anordnung wird eine besonders effiziente Abreinigung der regenerierbaren Oberflächenfilter 146 erzielt.

Die der mit den regenerierbaren Oberflächenfiltern 146 versehenen Seite der Strömungskammer 128 gegenüberliegende Seite des unteren Abschnitts 138 der Strömungskammer 128 ist durch eine vertikale Trennwand 198 von dem vom Abluftstrom 120 durchströmten Bereich des unteren Abschnitts 138 der Strömungskammer 128 abgetrennt.

Dieser abgetrennte Bereich 200 ist nach oben hin durch eines der Strömungsleitelemente 132 begrenzt und erstreckt sich nach unten hin bis zum Boden 202 der Strömungskammer 128.

Dieser vom durchströmten Bereich der Strömungskammer 128 abgetrennte Bereich 200 kann beispielsweise zur Aufnahme von Hilfseinrichtungen, wie Gebläsen, Speicherbehältern, Pumpen oder ähnlichem genutzt werden.

Alternativ oder ergänzend hierzu ist es möglich, den abgetrennten Bereich 200 als Luftkanal, beispielsweise als zusätzlichen Abluftkanal, Frischluftzuführkanal oder Abluftabführkanal, zu nutzen.

Der durchströmte Bereich des unteren Abschnitts 138 der Strömungskammer 128 wird nach unten durch das Sammelband 178 begrenzt.

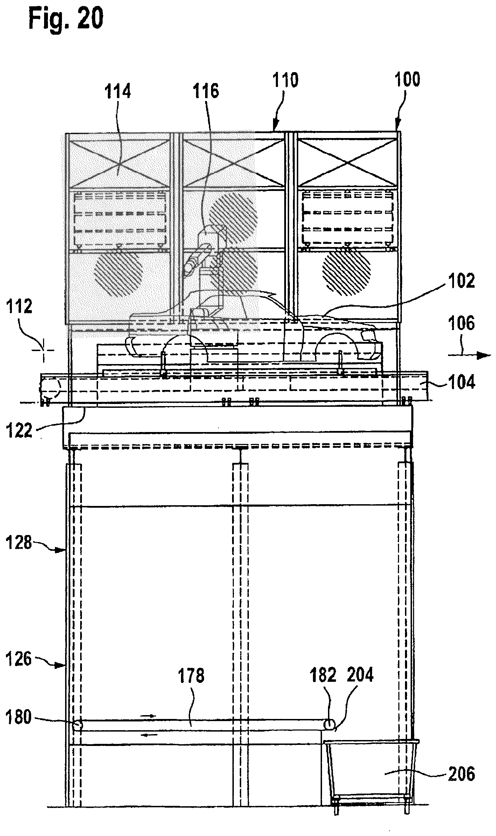

Insbesondere aus Fig. 20 ist zu ersehen, dass das Sammelband 178 im Bereich seiner nicht angetriebenen Umlenkrolle 182 mittels eines Abstreifers 204 von dem auf der Oberfläche des Sammelbandes 178 gesammelten Material, welches Precoat-Material und abgeschiedenen Nasslack-Overspray enthält, gereinigt wird, wobei das von dem Sammelband 178 abgestreifte Material in einen fahrbaren Sammelbehälter 206 gelangt.

Wenn in dem fahrbaren Sammelbehälter 206 ein vorgegebener Höchstfüllstand erreicht ist, wird der fahrbare Sammelbehälter 206 gegen einen leeren fahrbaren Sammelbehälter 206 ausgetauscht, und der befüllte fahrbare Sammelbehälter 206 wird zu einer (nicht dargestellten) Sammel- und Weiterverwertungsstation gefahren.

Da bei der in den Fig. 19 bis 22 dargestellten vierten Ausführungsform sämtliche Bestandteile der Vorrichtung 126 zum Abtrennen von Nasslack-Overspray innerhalb der vertikalen Projektion der Grundfläche der Lackierkabine 110 angeordnet sind, baut diese Ausführungsform besonders kompakt und ist besonders bei beengten Platzverhältnissen geeignet.

Im übrigen stimmt die in den Fig. 19 bis 22 dargestellte vierte Ausführungsform hinsichtlich Aufbau und Funktion mit der in den Fig. 1 bis 10 dargestellten ersten Ausführungsform überein, auf deren vorstehende Beschreibung insoweit Bezug genommen wird.

## Patentansprüche

1. Anlage zum Lackieren von Gegenständen, insbesondere von Fahrzeugkarosserien, umfassend mindestens eine Lackierkabine (110) und mindestens eine Vorrichtung zum Abtrennen von Nasslack-Overspray aus einem Overspray-Partikel enthaltenden Abluftstrom (120), wobei die Overspray-Partikel in einem Applikationsbereich (108) der Lackierkabine (110) in den Abluftstrom (120) gelangen, wobei die Vorrichtung (126) zum Abtrennen von Nasslack-Overspray mindestens eine Abtrennvorrichtung zum Abtrennen des Oversprays aus zumindest einem Teil des Abluftstroms (120) umfasst, welche mindestens ein regenerierbares Oberflächenfilter (146) aufweist,
wobei der Strömungsweg des Abluftstroms (120) von dem Applikationsbereich (108) zu der Abtrennvorrichtung (145) mindestens einen verengten Bereich (140) aufweist,
wobei die Vorrichtung (126) zum Abtrennen des Nasslack-Oversprays eine Strömungskammer (128) umfasst, die durch Strömungsleitelemente (132) in einen oberen Abschnitt (136) und einen unteren Abschnitt (138) unterteilt ist, wobei der obere Abschnitt (136) und der untere Abschnitt (138) durch den verengten Bereich (140) miteinander verbunden sind und mindestens eine Abtrennvorrichtung (145) in dem unteren Abschnitt (138) vorgesehen ist, und
wobei der verengte Bereich (140) einen sich von einander gegenüberliegenden Strömungsleitelementen (132) aus nach unten erstreckenden Abluftschacht (188) umfasst, der auf seinen Längsseiten durch sich in einer Förderrichtung (106) der Gegenstände erstreckende Schachtseitenwände (190) begrenzt ist,
**dadurch gekennzeichnet, dass**
a) von dem Nasslack-Overspray gereinigte Abluft aus einem Abluftkanal (160) zumindest teilweise zu einer Luftstromerzeugungseinrichtung (118) gelangt, welche die gereinigte Abluft über eine Zuführeinrichtung erneut dem Applikationsbereich (108) in der Lackierkabine (110) zuführt, und/oder dass
b) das mindestens eine regenerierbare Oberflächenfilter (146) mehrere, vertikal ausgerichtete, nebeneinander angeordnete, im Wesentlichen plattenförmige Filterelemente (154) mit Filteroberflächen (156) und im Betrieb der Vorrichtung (126) eine feuchte Oberfläche aufweist,
wobei die Oberfläche des mindestens einen regenerierbaren Oberflächenfilters (146) kontinuierlich oder intervallweise abspülbar ist, um den an den Filteroberflächen (156) abgeschiedenen Nasslack-Overspray zu entfernen, wobei das regenerierbare Oberflächenfilter (146) mit einer geeigneten Spüleinrichtung versehen ist.

2. Anlage nach Anspruch 1, **dadurch gekennzeichnet, dass** vertikal über dem mindestens einen regenerierbaren Oberflächenfilter (146) mindestens ein Abschirmelement (132) angeordnet ist, das ein senkrechtes Herabfallen von Gegenständen, Schmutz und/oder Lackpartikeln aus dem Applikationsbereich (108) auf das regenerierbare Oberflächenfilter (146) verhindert, eine Begrenzung des verengten Bereiches (140) bildet und zumindest einen Teil des Abluftstroms (120) zu dem verengten Bereich (140) hin leitet.

3. Anlage nach einem der Ansprüche 1 oder 2, **dadurch gekennzeichnet, dass** am Boden der Strömungskammer (128) ein Spalt (192) ausgebildet ist, durch welchen der Abluftstrom (120) aus dem verengten Bereich (140) in den unteren Abschnitt (138) der Strömungskammer (128) austritt.

4. Anlage nach einem der Ansprüche 1 bis 3, **dadurch gekennzeichnet, dass** die Anlage mindestens eine Precoat-Zuführvorrichtung (144) umfasst, welche ein Precoat-Material, insbesondere Kalk, ein Aluminiumsilikat, ein Aluminiumoxid, ein Siliziumoxid oder Pulverlack, intervallweise in den Abluftstrom (120) abgibt.

5. Anlage nach einem der Ansprüche 1 bis 4, **dadurch gekennzeichnet, dass** das mindestens eine regenerierbare Oberflächenfilter (146) eine ein Precoat-Material umfassende Sperrschicht aufweist, welche ein Verkleben der Filteroberfläche (156) verhindert,
wobei das mindestens eine regenerierbare Oberflächenfilter (146) intervallweise abreinigbar ist,
wobei ohne vorheriges Abreinigen des Oberflächenfilters neues Precoat-Material aufgebracht wird, um das spätere Abreinigungsverhalten des Oberflächenfilters (146) zu verbessern.

6. Anlage nach einem der Ansprüche 1 bis 5, **dadurch gekennzeichnet, dass** das mindestens eine regenerierbare Oberflächenfilter (146) eine ein Precoat-Material umfassende Sperrschicht aufweist, welche ein Verkleben der Filteroberfläche (156) verhindert,
wobei das mindestens eine regenerierbare Oberflächenfilter (146) intervallweise abreinigbar ist,
wobei das Oberflächenfilter (146) durch Druckluftimpulse abreinigbar ist und
wobei die erforderlichen Druckluftimpulse mittels eines Druckluftspeichers erzeugbar sind, welcher an einem Grundkörper (150) des Oberflächenfilters (146) angeordnet ist und dazu in der Lage ist, Druckluftimpulse an Druckluftrohre (174) abzugeben, die von dem Druckluftspeicher (172) in Innenräume (176) von Filterelementen (154) des Oberflächenfilters (146) führen.

7. Anlage nach einem der Ansprüche 1 bis 6, **dadurch gekennzeichnet, dass** ein Druckluftvorrat in einem Druckluftspeicher (172) über Druckluftzuführleitungen aus einem Druckluftnetz ergänzbar ist.

8. Verwendung einer
Anlage, umfassend mindestens eine Lackierkabine (110) und mindestens eine Vorrichtung (126) zum Abtrennen von Nasslack-Overspray aus einem Overspray-Partikel enthaltenden Abluftstrom (120), wobei die Overspray-Partikel in einem Applikationsbereich (108) der Lackierkabine (110) in den Abluftstrom (120) gelangen, wobei die Vorrichtung (126) zum Abtrennen von Nasslack-Overspray mindestens eine Abtrennvorrichtung zum Abtrennen des Oversprays aus zumindest einem Teil des Abluftstroms (120) umfasst, welche mindestens ein regenerierbares Oberflächenfilter (146) aufweist,
wobei der Strömungsweg des Abluftstroms (120) von dem Applikationsbereich (108) zu der Abtrennvorrichtung (145) mindestens einen verengten Bereich (140) aufweist, und
wobei
a) die Vorrichtung (126) zum Abtrennen des Nasslack-Oversprays im Wesentlichen horizontal ausgerichtete Strömungsleitelemente (132) umfasst, deren Oberseiten jeweils eine Strömungsleitfläche (135) bilden, welche den Abluftstrom (120) zu dem verengten Bereich (140) hin leitet,
und/oder
b) die Vorrichtung (126) zum Abtrennen von Nasslack-Overspray aus dem Abluftstrom asymmetrisch zu einer Längsmittelebene (194) der Lackierkabine (110) ausgebildet ist, wobei die regenerierbaren Oberflächenfilter (146) nur auf einer Seite der Längsmittelebene (194) angeordnet sind und der verengte Bereich (140) sich in einer Längsrichtung (106) der Lackierkabine (110) über im Wesentlichen die gesamte Länge der Lackierkabine (110) erstreckt,
zum Lackieren von Gegenständen, insbesondere von Fahrzeugkarosserien.

## Claims

1. Assembly for painting articles, in particular vehicle bodies, comprising at least one painting cabin (110) and at least one device for separating wet paint overspray from an exhaust air flow (120) containing overspray particles, wherein the overspray particles pass into the exhaust air flow (120) in an application zone (108) of the painting cabin (110), wherein the device (126) for separating wet paint overspray comprises at least one separation device for separating the overspray from at least a part of the exhaust air flow (120), which has at least one regenerable surface filter (146), wherein the flow path of the exhaust air flow (120) from the application zone (108) to the separation device (145) has at least one constricted region (140),
wherein the device (126) for separating wet paint overspray comprises a flow chamber (128), which is subdivided by flow guide elements (132) into an upper section (136) and a lower section (138), wherein the upper section (136) and the lower section (138) are connected to each other by the constricted region (140) and there is provided at least one separation device (145) in the lower section (138), and
wherein the constricted region (140) comprises an exhaust air shaft (188) extending downwardly from mutually opposing flow guide elements (132), the shaft being delimited on its longitudinal sides by shaft side walls (190) extending in a direction of transport (106) of the articles,
**characterised in that**
a) exhaust air cleaned of wet paint overspray from an exhaust air channel (160) at least partly reaches an air flow generating means (118), which supplies again the cleaned exhaust air via a supply means to the application zone (108) in the painting cabin (110),
and/or **in that**
b) the at least one regenerable surface filter (146) has a plurality of vertically-oriented, mutually adjacent and substantially plate-shaped filter elements (154) with filter surfaces (156) and in operation of the device (126) a moist surface,
wherein the surface of the at least one regenerable surface filter (146) is configured to be rinsed off continuously or at intervals, in order to remove the wet paint overspray deposited on the filter surfaces (156), the regenerable surface filter (146) being provided with a suitable rinsing means.

2. Assembly according to claim 1, **characterised in that** vertically above the at least one regenerable surface filter (146) there is arranged at least one shielding element (132), which prevents articles, dirt and/or paint particles from falling vertically from the application zone (108) onto the regenerable surface filter (146), forms a delimitation of the constricted region (140) and guides at least a part of the exhaust air flow (120) to the constricted region (140).

3. Assembly according to either of claims 1 or 2, **characterised in that** there is formed at the base of the flow chamber (128) a gap (192), through which the exhaust air flow (120) leaves the constricted region (140) into the lower section (138) of the flow chamber (128).

4. Assembly according to any one of claims 1 to 3, **characterised in that** the assembly comprises at least one precoat feeding device (144), which at intervals delivers to the exhaust air flow (120) a precoat material, in particular lime, an aluminium silicate, an aluminium oxide, a silicon oxide or powdered paint.

5. Assembly according to any one of claims 1 to 4, **characterised in that** the at least one regenerable surface filter (146) has a barrier layer comprising a precoat material, which prevents an agglutination of the filter surface (156),
wherein the at least one regenerable surface filter (146) is configured to be cleaned at intervals,
wherein, in order to improve the later cleaning characteristics of the surface filter (146), new precoat material is deposited without prior cleaning of the surface filter.

6. Assembly according to any one of claims 1 to 5, **characterised in that** the at least one regenerable surface filter (146) has a barrier layer comprising a precoat material, which prevents an agglutination of the filter surface (156),
wherein the at least one regenerable surface filter (146) is configured to be cleaned at intervals,
wherein the surface filter (146) is configured to be cleaned by pulses of compressed air,
wherein the pulses of compressed air required are configured to be generated by a compressed air storage means which is arranged on a base body (150) of the surface filter (146) and is capable of supplying compressed air pulses to compressed air pipes (174) which lead from the compressed air storage means (172) to the inner areas (176) of filter elements (154) of the surface filter (146).

7. Assembly according to any one of claims 1 to 6, **characterised in that** a compressed air store in a compressed air storage means (172) is configured to be supplemented from a compressed air supply via compressed air feed pipes.

8. Use of
an assembly comprising at least one painting cabin (110) and at least one device (126) for separating wet paint overspray from an exhaust air flow (120) containing overspray particles, wherein the overspray particles pass into the exhaust air flow (120) in an application zone (108) of the painting cabin (110), wherein the device (126) for separating wet paint overspray comprises at least one separation device for separating the overspray from at least a part of the exhaust air flow (120), which has at least one regenerable surface filter (146),
wherein the flow path of the exhaust air flow (120) from the application zone (108) to the separation device (145) has at least one constricted region (140), and
wherein
a) the device (126) for separating the wet paint overspray comprises substantially horizontally-oriented flow guide elements (132), the upper sides of which each form a flow guide surface (135), which guides the exhaust air flow (120) towards the constricted region (140),
and/or
b) the device (126) for separating wet paint overspray from the exhaust air flow is configured asymmetrically to a longitudinal central plane (194) of the painting cabin (110), wherein the regenerable surface filters (146) are arranged only on one side of the longitudinal central plane (194), and the constricted region (140) extends in a longitudinal direction (106) of the painting cabin (110) over substantially the entire length of the painting cabin (110),
for the painting of articles, in particular of vehicle bodies.

## Revendications

1. Installation pour la peinture d'objets, en particulier de carrosseries de véhicules, comprenant au moins une cabine d'application de peinture (110) et au moins un dispositif pour la séparation de l'excédent de peinture liquide d'un courant d'évacuation d'air (120) contenant des particules d'excédent de peinture, dans laquelle les particules d'excédent de peinture parviennent dans le courant d'évacuation d'air (120) dans une zone d'application (108) de la cabine d'application de peinture (110), dans laquelle le dispositif (126) pour la séparation de l'excédent de peinture liquide comprend au moins un dispositif de séparation pour séparer l'excédent de peinture d'au moins une partie du courant d'évacuation d'air (120), lequel dispositif de séparation présente au moins un filtre de surface régénérable (146),
dans laquelle la voie d'écoulement du courant d'évacuation d'air (120) de la zone d'application (108) au dispositif de séparation (145) présente au moins une zone rétrécie (140),
dans laquelle le dispositif (126) pour séparer l'excédent de peinture liquide comprend un compartiment d'écoulement (128) subdivisé en une section supérieure (136) et une section inférieure (138) par des éléments conducteurs d'écoulement (132), dans laquelle la section supérieure (136) et la section inférieure (138) communiquent l'une avec l'autre par la zone rétrécie (140), et au moins un dispositif de séparation (145) est prévu dans la section inférieure (138), et
dans laquelle la zone rétrécie (140) comprend un conduit d'évacuation d'air (188) s'étendant vers le bas depuis des éléments conducteurs d'écoulement (132) opposés l'un à l'autre, lequel est délimité sur ses longueurs par des parois latérales (190) de conduit s'étendant dans une direction de transport (106) des objets,
**caractérisée en ce que**
a) l'air d'échappement purifié de l'excédent de peinture liquide et provenant d'un canal d'évacuation d'air (160) parvient au moins partiellement à un dispositif générateur de flux d'air (118), lequel ramène au moyen d'un dispositif d'amenée l'air d'échappement purifié vers la zone d'application (108) dans la cabine d'application de peinture (110),
et/ou **en ce que**
b) le au moins un filtre de surface régénérable (146) présente plusieurs éléments de filtrage (154) sensiblement en forme de plaque avec des surfaces de filtrage (156), orientés verticalement et disposés côte à côte, ainsi qu'une surface humide pendant le fonctionnement du dispositif (126),
dans laquelle la surface du au moins un filtre de surface régénérable (146) est rinçable de manière continue ou par intervalles, pour permettre le retrait de l'excédent de peinture liquide séparé sur les surfaces de filtrage (156), dans laquelle le filtre de surface régénérable (146) est pourvu d'un dispositif de rinçage adapté.

2. Installation selon la revendication 1, **caractérisée en ce qu'**au moins un élément d'isolation (132) est disposé verticalement au-dessus du au moins un filtre de surface régénérable (146), lequel empêche une chute perpendiculaire d'objets, de saleté et/ou de particules de peinture depuis la zone d'application (108) sur le filtre de surface régénérable (146), forme une délimitation de la zone rétrécie (140) et conduit au moins une partie du courant d'évacuation d'air (120) vers la zone rétrécie (140).

3. Installation selon l'une des revendications 1 ou 2, **caractérisée en ce qu'**une fente (192) est ménagée sur le fond du compartiment d'écoulement (128), par laquelle le courant d'évacuation d'air (120) sort de la zone rétrécie (140) vers la section inférieure (138) du compartiment d'écoulement (128).

4. Installation selon l'une des revendications 1 à 3, **caractérisée en ce que** l'installation comprend au moins un dispositif d'amenée de sous-couche (144), lequel refoule par intervalles un matériau de sous-couche, en particulier de la chaux, un silicate d'aluminium, un oxyde d'aluminium, un oxyde de silicium ou une peinture en poudre, dans le courant d'évacuation d'air (120).

5. Installation selon l'une des revendications 1 à 4, **caractérisée en ce que** le au moins un filtre de surface régénérable (146) présente une couche de jonction comprenant un matériau de sous-couche, laquelle couche de jonction empêche un collage de la surface de filtrage (156),
dans laquelle le au moins un filtre de surface régénérable (146) est nettoyable par intervalles,
dans laquelle un nouveau matériau de sous-couche est appliqué sans nettoyage préalable du filtre de surface, pour améliorer le comportement de nettoyage ultérieur du filtre de surface (146).

6. Installation selon l'une des revendications 1 à 5, **caractérisée en ce que** le au moins un filtre de surface régénérable (146) présente une couche de jonction comprenant un matériau de sous-couche, laquelle couche de jonction empêche un collage de la surface de filtrage (156),
dans laquelle le au moins un filtre de surface régénérable (146) est nettoyable par intervalles,
dans laquelle le filtre de surface (146) est nettoyable par pulsions d'air comprimé, et
dans laquelle les pulsions d'air comprimé exigées peuvent être générées au moyen d'un accumulateur pneumatique, lequel est disposé sur un corps de base (150) du filtre de surface (146) et est en mesure de délivrer des pulsions d'air comprimé à des conduites pneumatiques (174) qui mènent de l'accumulateur pneumatique (172) à des compartiments intérieurs (176) d'éléments de filtrage (154) du filtre de surface (146).

7. Installation selon l'une des revendications 1 à 6, **caractérisée en ce qu'**une réserve d'air comprimé dans un accumulateur pneumatique (172) peut être complétée à l'aide de conduites d'amenée d'air comprimé d'un réseau pneumatique.

8. Utilisation d'une
installation comprenant au moins une cabine d'application de peinture (110) et au moins un dispositif (126) pour séparer l'excédent de peinture liquide d'un courant d'évacuation d'air (120) contenant des particules d'excédent de peinture, dans laquelle les particules d'excédent de peinture parviennent dans le courant d'évacuation d'air (120) dans une zone d'application (108) de la cabine d'application de peinture (110), dans laquelle le dispositif (126) pour séparer l'excédent de peinture liquide comprend au moins un dispositif de séparation pour séparer l'excédent de peinture d'au moins une partie du courant d'évacuation d'air (120), lequel dispositif de séparation présente au moins un filtre de surface régénérable (146),
dans laquelle la voie d'écoulement du courant d'évacuation d'air (120) de la zone d'application (108) au dispositif de séparation (145) présente au moins une zone rétrécie (140), et
dans laquelle
a) le dispositif (126) pour séparer l'excédent de peinture liquide comprend des éléments conducteurs d'écoulement (132) orientés sensiblement horizontalement, dont les faces supérieures forment respectivement une surface conductrice d'écoulement (135) qui conduit le courant d'évacuation d'air (120) vers la zone rétrécie (140),
et/ou
b) le dispositif (126) pour séparer l'excédent de peinture liquide est configuré de manière asymétrique par rapport à un plan longitudinal médian (194) de la cabine d'application de peinture (110), dans laquelle les filtres de surfaces régénérables (146) ne sont disposés que d'un côté du plan longitudinal médian (194), et la zone rétrécie (140) s'étend dans une direction longitudinale (106) de la cabine d'application de peinture (110) sur sensiblement la longueur totale de la cabine d'application de peinture (110),
pour la peinture d'objets, en particulier de carrosseries de véhicules.
